# EUROPEAN PATENT SPECIFICATION

(11) **EP 0 653 460 B1**
(45) Date of publication and mention of the grant of the patent: **10.03.1999**
(21) Application number: 94117784.2
(22) Date of filing: 10.11.1994
(51) Int. Cl.: C08L 67/02, C08L 67/03, C08L 69/00, C08K 5/49, C08K 5/524, C08K 5/527

(54) **Synthetic resin composition and product of molding thereof**
Kunstharzzusammensetzung und geformter Gegenstand daraus
Composition de résine synthétique et son produit moulé

(30) Priority: 11.11.1993 JP 282377/93; 14.10.1994 JP 249116/94
(43) Date of publication of application: 17.05.1995
(73) Proprietor: POLYPLASTICS CO. LTD., Chuo-Ku Osaka-shi Osaka 541 (JP)
(72) Inventor: Aketa, Tomoyuki, Fuki-shi, Shizuoka (JP); Ishikawa, Takayuki, Shimizu-shi, Shizuoka (JP)
(74) Representative: DIEHL GLAESER HILTL & PARTNER

(56) References cited:
- EP-A- 0 180 960
- EP-A- 0 251 712
- EP-A- 0 303 449
- EP-A- 0 411 866
- DE-A- 4 232 822
- DATABASE WPI Section Ch, Week 9539 Derwent Publications Ltd., London, GB; Class A23, AN 95-293521 XP002031494 & CA 2 138 728 A (POLYPLASTICS KK) , 29 June 1995
- DATABASE WPI Section Ch, Week 9622 Derwent Publications Ltd., London, GB; Class A18, AN 96-221976 XP002031495 & WO 96 11985 A (POLYPLASTICS KK) , 25 April 1996

## Description

The invention relates to a blended resin compositon comprising a polyester resin not forming an anisotropic melt phase and a liquid crystal polyester resin as well as a product of molding thereof.

### Description of prior art and problem to be solved by the invention

A liquid crystal polyester resin (LCP) capable of forming an anisotropic melt phase is a thermoplastic resin having many characteristics such as high strength, high rigidity, high thermal resistance and easy moldability, but there are also commercial disadvantages such as mold shrinkage and mechanical properties being different from each other between the molecular chain orientation and the directions vertical thereto as well as the price being high.

On one hand, a polycarbonate resin such as a polycarbonate resin (PC) etc. not forming an anisotropic melt phase is relatively cheap, but physical properties thereof such as rigidity are inferior to that of a liquid crystal polyester, which is a disadvantage.
Particularly, rigidity is insufficient for use in a thin housing, so that thickening should be made from the viewpoint of designing. There are thus some limitations regarding the present miniaturizing and weight-reducing trends in electric, electronic and communication machinery fields.

Thus, in order to make a good use of the advantages of LCP and the polyester resin not forming an anisotropic melt phase, there was tried to mix them for compensating their disadvantages. However, in an injection molded product made from a resin composition wherein a small quantity of LCP is blended with a polyester resin not forming an anisotropic melt phase, characteristics of LCP such as high strength, high rigidity, high thermal resistance and easy moldability are not made of a good use, so that mechanical strength decreases markedly. The cause thereof is that high mechanical properties of LCP are obtained due to molecular orientation by being subjected to shear stress and tensile stress. That is, in a resin composition obtained by only blending a polyester resin not forming an anisotropic melt phase and a small quantity of LCP, although molecules are orientated in parts near the surface layer of the product, parts other than the surface layer have a form wherein the polyester resin not forming an anisotropic melt phase being a matrix and almost all LCP being just dispersed spherically without any reinforcing effect. That is, only after LCP is fibrillated within a product of molding, LCP is molecularly orientated in the direction of length in a fibrous form to become a form with reinforcing effect.

On the other hand, if the proportion of LCP is increased and the polyester resin not forming an anisotropic melt phase is decreased, there is produced a form wherein LCP being a matrix and PC being dispersed as an island form. As the result, the advantage of the polyester resin not forming an anisotropic melt phase cannot be made a good use and utility value becomes low.

Thus, there have been considered some methods by which thermoplastics resin such as LCP and PC are extruded with drawing at a temperature for melting both resins, to make a material for molding wherein LCP being present in fiber form with a large aspect ratio. The material for molding is then molded at a temperature at which LCP is not molten and only the thermoplastic resin such as PC is molten, to make a product of molding containing fibrous LCP with a reinforcing effect, as described in Specifications of Japanese Patent Laid-Open Application No. Hei 5-70700 and Hei 5-112709.

However, LCP should keep its orientated state in fibrous form by extruding with drawing beforehand, or in the case for making a product of molding from beginning, the resin composition should be subjected a considerably high shear force when being filled into a mold and LCP should be fibrillated.

In the former case, there is considered that flowability becomes bad or molding conditions are limited. In the latter case, an appearance of a product may be considerably affected and also insufficient strength may be produced because of insufficient partial fibrillation.

The inventors have studied and investigated seriously in order to obtain a material having excellent characteristics as a molding material, with taking into consideration of the above-mentioned problem, and have found a resin composition by blending a specified phosphorus compound to complete the present invention. Thereby, it is unnecessary to extrude LCP beforehand for orientating in a fibrous form, and LCP expresses a reinforcing effect by molding at a temperature at which LCP also flows sufficiently in the molding step to fibrillate LCP easily, and there may be obtained values close to those of LCP as to mechanical strength and thermal resistance of a product as well as easy moldability.

That is, the present invention relates to a synthetic resin composition comprising 100 parts by weight of a resin component composed of 99 to 50 parts by weight of a polyester resin (a) not forming an anisotropic melt phase and 1 to 50 parts by weight of a liquid crystal polyester resin (b) capable of forming an anisotropic melt phase as well as 0.01 to 0.5 part by weight of a phosphorus compound (c), said liquid crystal polyester resin (b) capable of forming an anisotropic melt phase is fibrillated to an aspect ratio of 6 or more in the molding step.

The invention provides an embodiment wherein the composition comprises 100 parts by weight of a resin component composed of 90 to 50 parts by weight of (a) a polyester resin, preferably a polycarbonate, not forming an anisotropic melt phase and 10 to 50 parts by weight of (b) a liquid crystal polyester to form or being capable of forming an anisotropic melt phase and 0.05 to 0.5 part by weight of (c) a phosphorus compound, (b) having been fibrillated so as to have an aspect ratio of 6 or larger, when the composition is being molded.

It provides a process for producing a molded article from the above defined composition comprising (a), (b) and (c), which comprises the step of molding the composition so that (b) may be fibrillated to have an aspect ratio of 6 or more.

The present invention is illustrated in detail as follows.

The liquid crystal polyester resin (b) capable of forming an anisotropic melt phase is a melt processable polyester and has such a property that molecular chains of the polymer have a regular parallel sequence in a molten state. The state wherein the molecules are sequenced in such a way is often called a liquid crystal state or a nematic phase of a liquid crystal material. These polymer molecules are generally slender and flat, and have considerably high rigidity along the long axis of molecules and comprise polymers with multiple chain-extending bonds generally in either co-axial or parallel relations.

Properties of an anisotropic melt phase can be confirmed by a polarization test method. More concretely, confirmation of the anisotropic melt phase can be carried out by using a Leitz polarization microscope and observing a molten sample mounted on a Leitz hot stage under a nitrogen atmosphere at a magnification of 40. The polymer according to the present invention expresses optical anisotropy, since a polarized light transmits even in a molten static state when tested between crossed polarizers.

The liquid crystal polymers suitable for use according to the present invention tend to be substantially insoluble in common solvents, thus being unsuitable for solution processing. However, as described above, these polymers can be easily processed by a common melt processing method.

As the liquid crystal polymers used according to the present invention, aromatic polyesters and aromatic polyesteramides are preferable, as well as polyesters containing aromatic polyester and aromatic polyesteramide partially in the same molecular chain are also preferred examples.

Particularly preferable are liquid crystal aromatic polyesters and liquid crystal aromatic polyesteramides containing at least one compound selected from a group consisting of aromatic hydroxyl carboxylic acids, aromatic hydroxyl amines and aromatic diamines as a constituting component.

More concretely, there may be mentioned
1) polyesters predominantly comprising one, two or more of aromatic hydroxycarboxylic acids and derivatives thereof,
2) polyesters predominantly comprising
   a) one, two or more of aromatic hydroxycarboxylic acids and derivatives thereof,
   b) one, two or more of aromatic dicarboxylic acids, alicyclic dicarboxylic acids and derivatives thereof, and
   c) at least one, two or more of aromatic diols, alicyclic diols, aliphatic diols and derivatives thereof,
3) polyesteramides predominantly comprising
   a) one, two or more of aromatic hydroxycarboxylic acids, and derivatives thereof,
   b) one, two or more of aromatic hydroxyamines, aromatic diamines and derivatives thereof, and
   c) one, two or more of aromatic dicarboxylic acids, alicyclic dicarboxylic acids and derivatives thereof,
4) polyesteramides predominantly comprising
   a) one, two or more of aromatic hydroxycarboxylic acids and derivatives thereof,
   b) one, two or more of aromatic hydroxyamines, aromatic diamines and derivatives thereof, and
   c) one, two or more of aromatic dicarboxylic acids, alicyclic dicarboxylic acids and derivatives thereof, and
   d) at least one, two or more of aromatic diols, alicyclic diols, aliphatic diols and derivatives thereof.

Furthermore, a molecular weight modifier may be used if required together with the above-mentioned constituting components.

Preferred examples of concrete compounds constituting the liquid crystal polyesters according to the present invention are naphthalene compounds such as 2,6-naphthalene dicarboxylic acid, 2,6-dihydroxynaphthalene, 1,4-dihydroxynaphthalene and 6-hydroxy-2-naphthoic acid; biphenyl compounds such as 4,4'-diphenyl dicarboxylic acid and 4,4'-dihydroxybiphenyl; benzene compounds substituted at para-position and nuclear-substituted benzene compounds such as p-hydroxy benzoic acid, terephthalic acid, hydroquinone, p-aminophenol and p-phenylene diamine (substituents being selected from chlorine, bromine, methyl, phenyl, 1-phenyl and ethyl); as well as benzene compounds substituted at meta-position such as isophthalic acid and resorcinol, etc.

Preferable examples of these concrete compounds are naphthalene compounds such as 2,6-naphthalene dicarboxylic acid, 2,6-dihydroxynaphthalene, 1,4-dihydroxynaphthalene and 6-hydroxy-2-naphthoic acid; biphenyl compounds such as 4,4'-diphenyl dicarboxylic acid and 4,4'-dihydroxybiphenyl; compounds expressed by the following general formulae (I), (II) or (III): 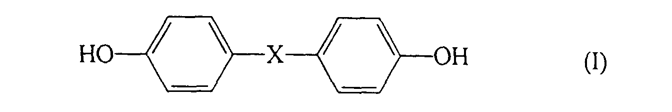 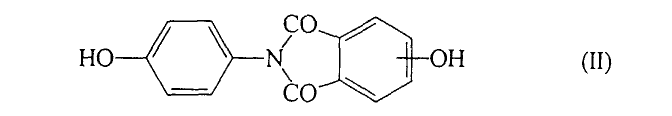 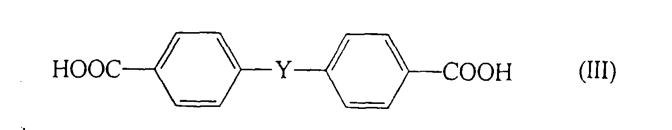 wherein, X is a radical selected from alkylene (C₁-C₄), alkylidene, -O-, -SO-, -SO₂-, -S- and -CO-, Y is a radical selected from -(CH₂)ₙ-(n=1-4) and -O(CH₂)ₙO-(n=1-4).

Furthermore, the liquid crystal polyesters used according to the present invention may be polyalkylene terephthalates not showing an anisotropic melt phase partially in the same molecular chain, in addition to the above-mentioned constituting components. In these cases, an alkyl radical has 2 - 4 carbon atoms.

Amongst of the above-mentioned constituting components, those containing one, two or more compounds selected from naphthalene compounds, biphenyl compounds and benzene compounds substituted at the para-position as the constituting component are more preferred examples. Additionally, among the benzene compounds substituted at p-position, p-hydroxy benzoic acid, methyl hydroquinone and 1-phenyl ethyl hydroquinone are particularly preferred examples.

Concrete examples of the compounds having an esterifying functional group which are also a constituting component and concrete examples of polyesters forming an anisotropic melt phase preferable for use according to the invention are described in Japan published application No. Sho 63-36633.

The above-mentioned aromatic polyesters and polyesteramides show generally a logarithmic viscosity (I.V.) of at least about 2.0 dl/g, for example about 2.0 - 10.0 dl/g, when being dissolved at 60°C in pentafluorophenol at a concentration of 0.1 weight %.

The amount of LCP in the blend composition according to the present invention is 1 - 50 parts by weight in total 100 parts by weight of the blend containing the polyester resin (a) not forming an anisotropic melt phase.

The polyester resins (a) not forming an anisotropic melt phase used as the other component according to the present invention are thermoplastic macromolecular compounds having ester bonds in main chains of the molecules, and there may be mentioned polycarbonate resins, polyalkylene terephthalate resins and polyallylate resins etc.

The polycarbonate resins generally have repeated units expressed by the formula (IV): 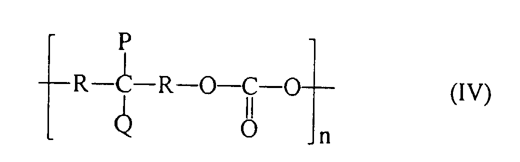 wherein, R is selected from aromatic radicals such as naphtylene, phenylene, halogen-substituted phenylene and alkyl-substituted phenylene, P and Q are selected respectively from a group consisting of hydrogen, hydrocarbon radicals without aliphatic unsaturated bonds and radicals forming a cycloalkane radical together with adjacent carbon atoms, provided that total number of carbon atoms in P and Q being 12 or less.

The polyalkylene terephthalate resins are polyesters obtained by polycondensing terephthalic acid or its esterifying derivatives and alkylene glycol having 2 - 4 carbon atoms or its esterifying derivatives, polyethylene terephthalate resins and polybutylene terephthalate resins. Furthermore, there may be used copolymers wherein dicarboxylic acids and alkyl-, alkoxy- or halogen-substituted compounds thereof such as isophthalic acid, cyclohexane carboxylic acid, adipic acid, dodecane diacid; dihydroxy compounds such as ethylene glycol, butane diol, triethylene glycol and diethoxylated bisphenol A; as well as hydroxy carboxylic acids and alkyl-, alkoxy- or halogen-substituted compounds thereof such as hydroxy benzoic acid and hydroxy naphthoic acid are introduced as the third component in an amount of about 1 - 40 mole %.

The polyallylate resins are aromatic polyester copolymers obtained from terephthalic acid, isophthalic acid or their esterifying derivatives and bisphenols expressed by the general formula (V): 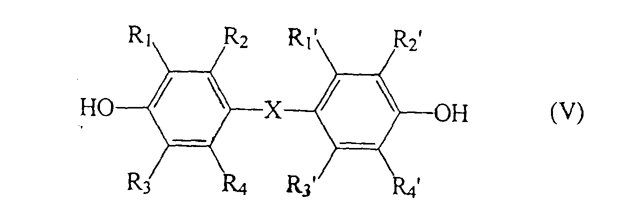 wherein, -X- is selected from a group consisting of -O-, -S-, -SO₂-, -CO-, alkylene radical or alkylidene radical (if required, alkylene radical or alkylidene radical may be substituted by one or more of hydrocarbon radical, halogen atom or halogenated hydrocarbon radical), and R₁, R₂, R₃, R₄, R₁', R₂', R₃' and R₄' are selected from a group consisting of hydrogen atom, halogen atom and hydrocarbon radical.

As the polyester resins (a) not forming an anisotropic melt phase according to the present invention, polycarbonate resins and polyallylate resins are preferably used from the viewpoint of thermal resistance, when they are molten and kneaded with LCP.

Furthermore, the thermoplastic resins not forming an anisotropic melt phase other than (a) and (b) may be blended in an amount of 1 - 90 parts by weight. As examples of said thermoplastic resins, there may be mentioned polyethylene, polypropylene, ethylenepropylene copolymers, ethylene-vinyl acetate copolymers, polyamides, polyacetal; styrene resins such as polystyrene, styrene-butadiene copolymers, styrenebutadiene-acrylonitrile copolymers (or their ester copolymers) and styrene-acrylonitrile copolymers; polyurethane, fluorine resins, polyphenylene oxide, polyphenylene sulfide, polybutadiene, butyl rubbers, silicone resins, olefin thermoplastic elastomers (such as EPDM or ionomers), styrene thermoplastic elastomers, preferably hydrogenated block copolymer or styrene and isoprene (such as trade products SEP or SEPS), urethane thermoplastic elastomers, polyester thermoplastic elastomers, polyamide thermoplastic elastomers, polyether thermoplastic elastomers, multilayer graft copolymers comprising predominantly polyacrylate or their modified copolymers. Among them, particularly preferable are styrene resins and polyphenylene oxide, which are relatively compatible with the polyester resins.

Furthermore, in order to fibrillate LCP in the molding step to an average aspect ratio of 6 or more, which being an object of the present invention, it is necessary to add the phosphorus compounds (c). As the phosphorus compounds (c), there may be mentioned phosphorus compounds, phosphate compounds and phosphite compounds, wherein for example tetrakis(2,4-di-t-butyl-phenyl)-4,4'-biphenylene phosphonite, bis(2,6-di-t-butyl-4-methylphenyl)pentaerythritol diphosphite, bis(2,4,6-di-t-butylphenyl)pentaerythritol diphosphite and tris(2,4-di-t-butylphenyl)phosphite are mentioned. Phosphite compounds are preferable, and phosphite compounds of pentaerythritol type are particularly preferable.

According to the present invention, one of the resin components, LCP, is fibrillated easily at a low shear rate region by adding the phosphorus compound (c), so that fibrillated layers of LCP are formed not only in thin parts but also in thick parts from the surface layer to inside considerably even if the flow velocity of the resin is slow in the molding step, and thus high strength and high modulus of elasticity may be obtained.

The amount of the phosphorus compound is 0.01 - 0.5 parts by weight, particularly 0.05 - 0.3 parts by weight for total 100 parts by weight of (a) and (b). If the blended amount is less than 0.01 part by weight, LCP cannot be fibrillated to the average aspect ratio of 6 or more by the general molding. If the phosphorus compound being blended in more than 0.5 part by weight, much gases of the blended phosphorus compound are produced to damage mechanical strength and moldability. Particularly, it is preferable that a ratio (c)/(a) of the polyester resin (a) not forming an anisotropic melt phase and the phosphorus compound (c) being 0.001 - 0.005. If the proportion of the phosphorus compound (c) is within said range, LCP becomes resinous easily and LCP can be fibrillated regardless of molding conditions and product forms.

Various fibrous, powdery or plate-form inorganic fillers may be blended into the product made from the blend . of the invention, in accordance with the utility objects.

As the fibrous fillers, there may be mentioned inorganic fibrous materials such as glass fibers, asbestos fibers, silica fibers, silica-alumina fibers, alumina fibers, zirconia fibers, boron nitride fibers, silicon nitride fibers, boron fibers and potassium titanate fibers, as well as metal fibrous materials such as stainless steel, aluminium, titanium, copper and brass.

On one hand, as powdery fillers, there may be mentioned carbon black, graphite, silica, quartz powders, glass beads, milled glass fibers, glass spheres glass powders; silicates such as potassium silicate, aluminium silicate, kaolin, talc, clay, diatomaceous earth and wollastonite; metal oxides such as iron oxide, titanium oxide, zinc oxide, antimony trioxide and alumina; metal carbonates such as potassium carbonate and magnesium carbonate; metal sulfates such as potassium sulfate and barium sulfate; as well as ferrite, silicon carbide, silicon nitride, boron nitride and various metal powders.

Furthermore, as the plate-form fillers, there may be mentioned mica, glass flakes and various metal foils.

These inorganic fillers may be used alone or in mixture of two or more.

The inorganic fillers used according to the present invention can be used together with a known surface-treating agent due to the desired physical properties. There may be mentioned, for example, functional compounds such as epoxy compounds, isocyanate compounds, titanate compounds and silane compounds. It is preferable to treat the inorganic filler with said compounds other than epoxy compounds or amino compounds such as polyamide compounds.

These fillers may be used after carrying out surface-treatment beforehand, or they may be added simultaneously in preparation of materials.

Herein, an amount of the blended inorganic filler is preferably 1 - 50 weight %.

Furthermore, a flame retarder can be blended to retard firing. Organic halogenated compounds etc. may be used as the flame retarder, aromatic bromine compounds being particularly preferable. As an auxiliary flame retarder, there may be used metal oxides and hydroxides such as antimony trioxide, antimony halide, aluminium hydroxide and magnesium hydroxide.

Herein, in the resin composition, LCP is preferably fibrillated to the average aspect ratio of 6 or more within a product. If the average aspect ratio being less than 6, characteristics of the resin composition, namely, high strength and high modulus of elasticity, cannot be obtained, and particularly in a thin product of molding for weight-reducing and miniaturization, sufficient rigidity cannot be obtained.

The composition according to the present invention can be prepared by means of a conventional device and a method generally used in preparation of a synthetic resin composition. For example, there may be mentioned a method wherein the necessary components are mixed and extruded with kneading by use of a one- or two-axial extruder to prepare pellets, and then the pellets are mixed in a specified amount to supply for molding, and the product of molding with objective composition is obtained after molding. That is, LCP is fibrillated in the molding step according to the invention, and any method may be used as the preparation method for the composition before molding. Herein, LCP contained in PC is preferably molded at a temperature to flow due to shear force in the molding step, particularly at a temperature above the melting point of LCP. If the temperature is above the melting point of LCP, LCP is easily fibrillated by means of shear force with making a good use of the characteristics, that is, LCP may easily flow due to shear force of LCP.

The present invention is illustrated concretely by the following examples, but the invention is not limited to them.

### Example 1

0.1 part by weight of a phosphite ester [bis(2,6-di-t-butyl-4-methylphenyl)pentaerythritol diphosphite] was blended with a resin component with a mixing ratio of 9:1 comprising a constituting component referred hereinafter to PC (manufactured by Mitsubishi Gas Kagaku Co. Ltd., Upiron S 3000) and LCP-A to obtain a blend, which was then molten and kneaded at a resin temperature of 250°C in a two-axial extruder with 30mm size to pelletize. Then, the pellets were molded to a test piece at a resin temperature of 250°C by injection molding and the piece was evaluated as to mechanical properties, melt viscosity and the average aspect ratio of LCP. The evaluated results are shown in Table 1.

Evaluation methods are performed as follows.

### Modulus of bending elasticity

According to ASTM D 790, modulus of bending elasticity (kgf/cm² or 0.098 N/mm²) was determined by using a test piece with a thickness of 1/16 inch, (1.587 mm).

### Izod impact strength

According to ASTM D 256, an Izod impact strength with notching (kgf·cm/cm or 9.81 N. cm/cm) was determined.

### Average aspect ratio of LCP (length/thickness)

After the test piece used in determination of the modulus of bending elasticity was cut in such a manner to obtain a parallel plane in the flowing direction, the section thereof was polished by mirror cotton, and the surface thereof was observed by an electron microscope for evaluation. That is, fifty fibrillated LCPs selected randomly were determined as to length/thickness to obtain an average value. Herein, the length observable on the surface was determined in view of the length of the surface. Evaluation standards are as follows:

| | |
|---|---|
| average aspect ratio of 6 or more | o |
| average aspect ratio of less than 6 | × |

### Melt viscosity

It was determined by means of a melt viscosimeter (capirograph). manufactured by Toyo Seiki Co. Ltd. under the following conditions: a determination temperature being the temperature in the molding step and a shear rate being 1000 sec⁻¹.

### Examples 2 - 3

A test piece was molded and evaluated analogously to Example 1 except that the extrusion temperature and the molding temperature were varied. The evaluated results are shown in Table 1.

### Examples 4 - 5

A test piece was molded and evaluated analogously to Example 3 except that the mixing ratio of PC and LCP-A as well as the blended amount of the phosphite ester were varied. The evaluated results are shown in Table 1.

### Comparative example 1

A test piece was molded and evaluated analogously to Example 3 except that the phosphite ester was not used. The evaluated results are shown in Table 1.

### Comparative examples 2 - 3

A test piece was molded and evaluated analogously to Comparative example 1 except that the mixing ratio of PC and LCP-A was varied. The evaluated results are shown in Table 1.

### Comparative examples 4 - 5

A test piece was molded and evaluated analogously to Comparative example 1 by using PC pellets or LCP-A pellets. The evaluated results are shown in Table 1.

### Examples 6 - 8

A test piece was molded and evaluated analogously to Example 5 except that polyacrylate (PAR) (manufactured by Unichika Co. Ltd., U polymer: U-1000) or polybutylene terephthalate (PBT) (manufactured by Polyplastics Co. Ltd., Duranex: #2002) or polyethylene terephthalate (PET) (manufactured by Kanegafuchi Kagaku Kogyo Co. Ltd., Belpet: DFG-1) was used instead of PC. The evaluated results are shown in Table 2.

### Examples 9 - 11

A test piece was molded and evaluated analogously to Example 5 except that a mixture of PC and PAR, PC and PBT, or PBT and PET (mixing ratio = 5:2) was used instead of PC. The evaluated results are shown in Table 2.

### Examples 12 - 15

A test piece was molded and evaluated analogously to Example 5 except that a mixture of PC and ABS (manufactured by Daiseru Kagaku Co. Ltd., Sebian-V: #680), PAR and ABS, PBT and PPE (manufactured by GEPJ Co. Ltd., Noryl: 731J) (mixing ratio = 5:2) was used instead of PC. The evaluated results are shown in Table 2.

### Comparative examples 6 - 7

A test piece was molded and evaluated analogously to Example 6 or 7 except that the phosphite ester was not used. The evaluated results are shown in Table 3.

### Comparative examples 8 - 10

A test piece was molded and evaluated analogously to Examples 9 - 11 except that the phosphite ester was not used. The evaluated results are shown in Table 3.

### Comparative examples 11 - 13

A test piece was molded and evaluated analogously to Examples 12 - 14 except that the phosphite ester was not used. The evaluated results are shown in Table 3.

### Examples 16 - 19

PC, LCP-A, a phosphite ester and an inorganic filler were blended at the composition ratio shown in Table 4, and a test piece was molded and evaluated analogously to the above-mentioned Examples. The evaluated results are shown in Table 4.

### Examples 20 - 21

PC, LCP-B comprising the constituting components described below, a phosphite ester and an inorganic filler were blended at the composition ratio shown in Table 4, and a test piece was molded and evaluated analogously to the above-mentioned Examples. The evaluated results are shown in Table 4.

### Comparative examples 14 - 16

PC, LCP-A and an inorganic filler were blended at the composition ratio shown in Table 4, and a test piece was molded and evaluated analogously to the above-mentioned Examples. The evaluated results are shown in Table 4.

Herein, the liquid polyester resins used in the Examples were those having the following constituting units: 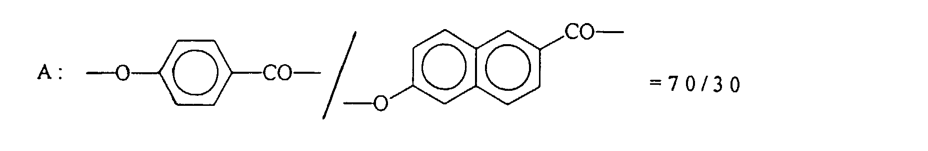 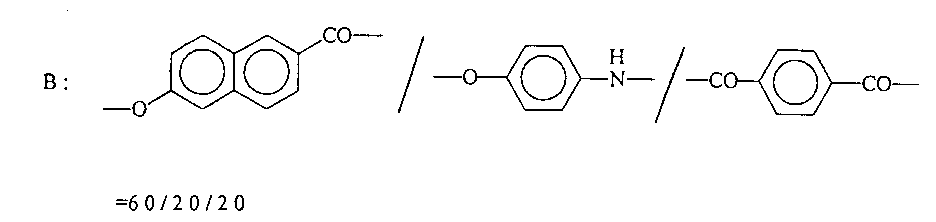 wherein, the above-mentioned figures are expressed in molar ratio.

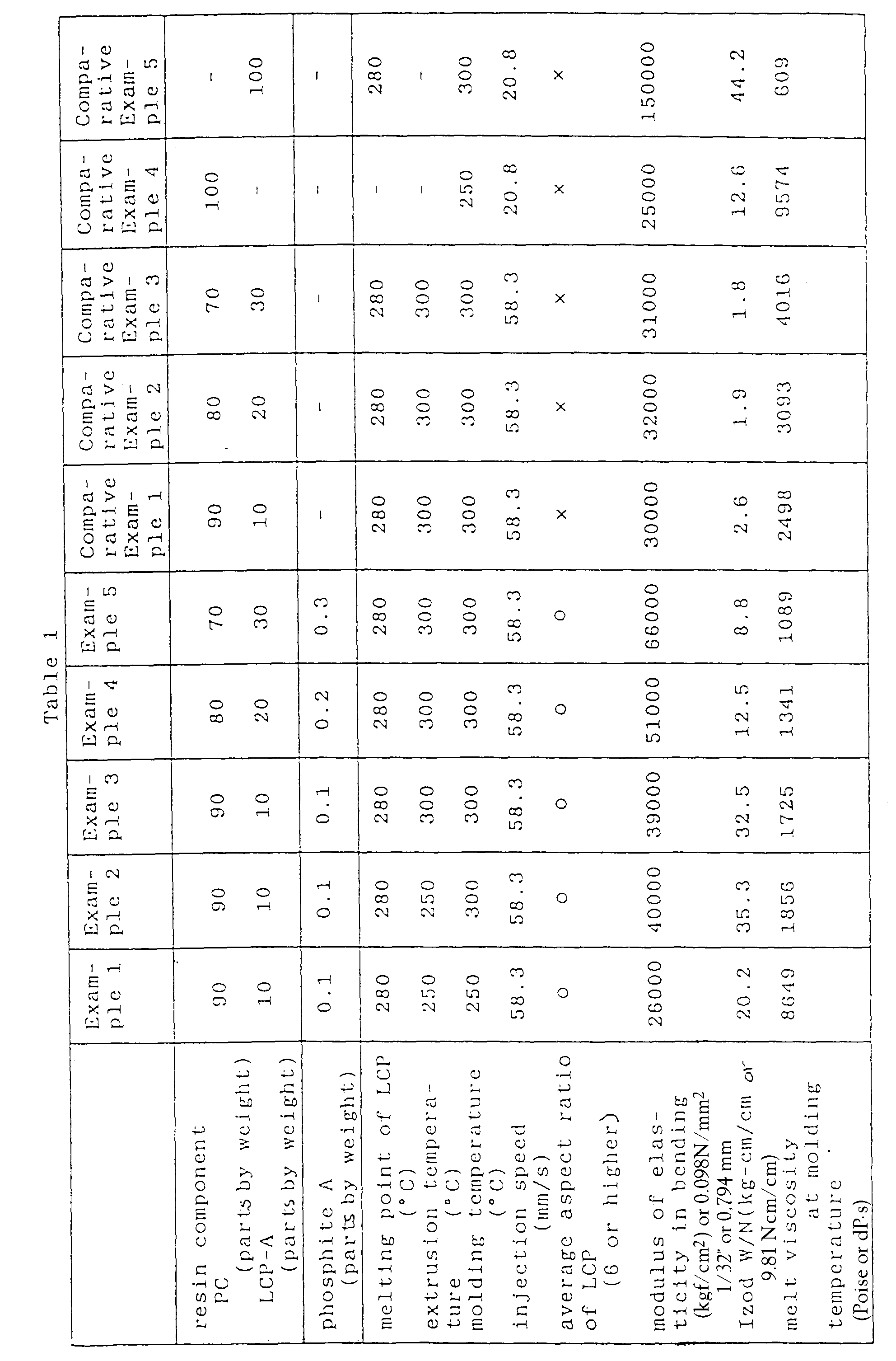

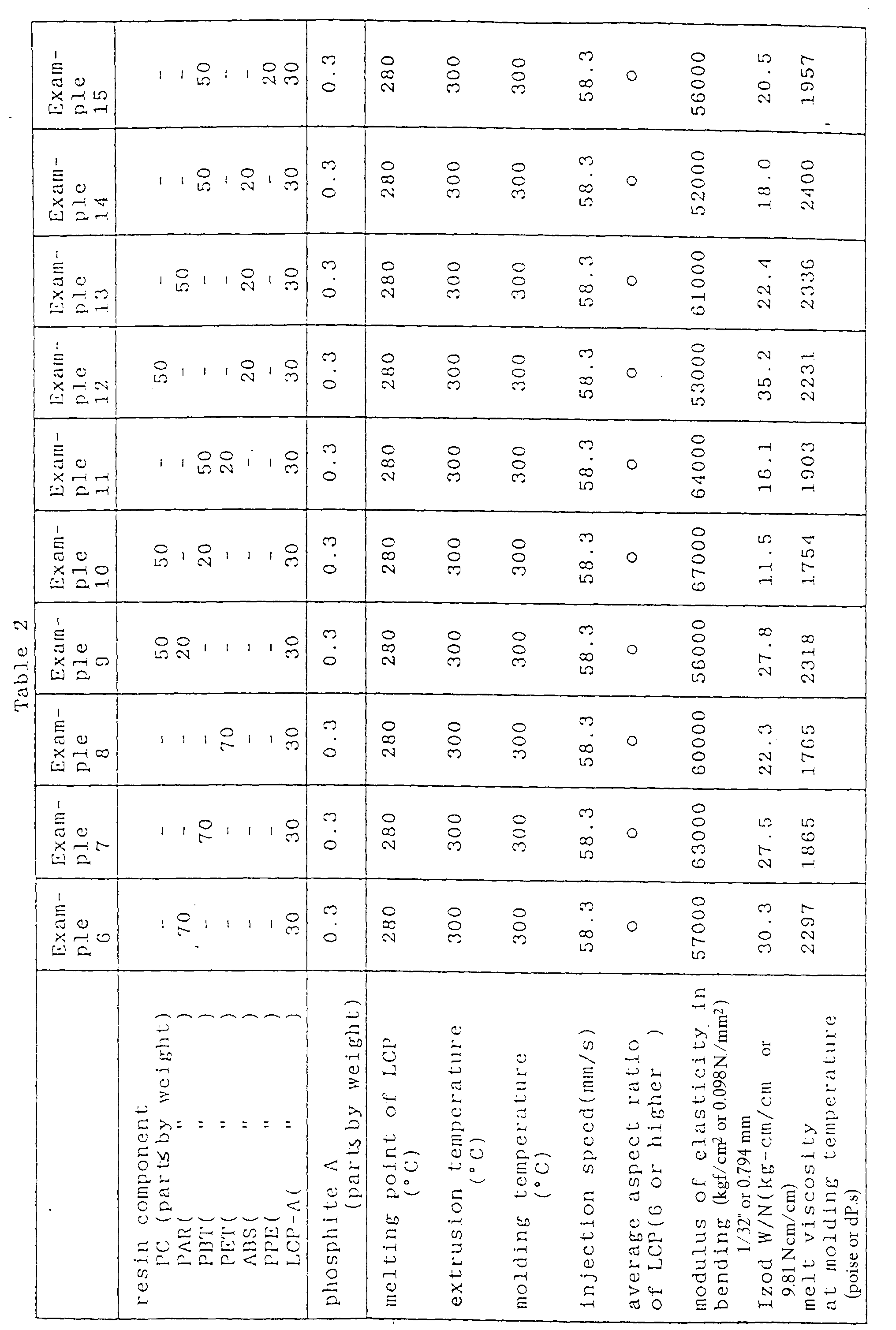

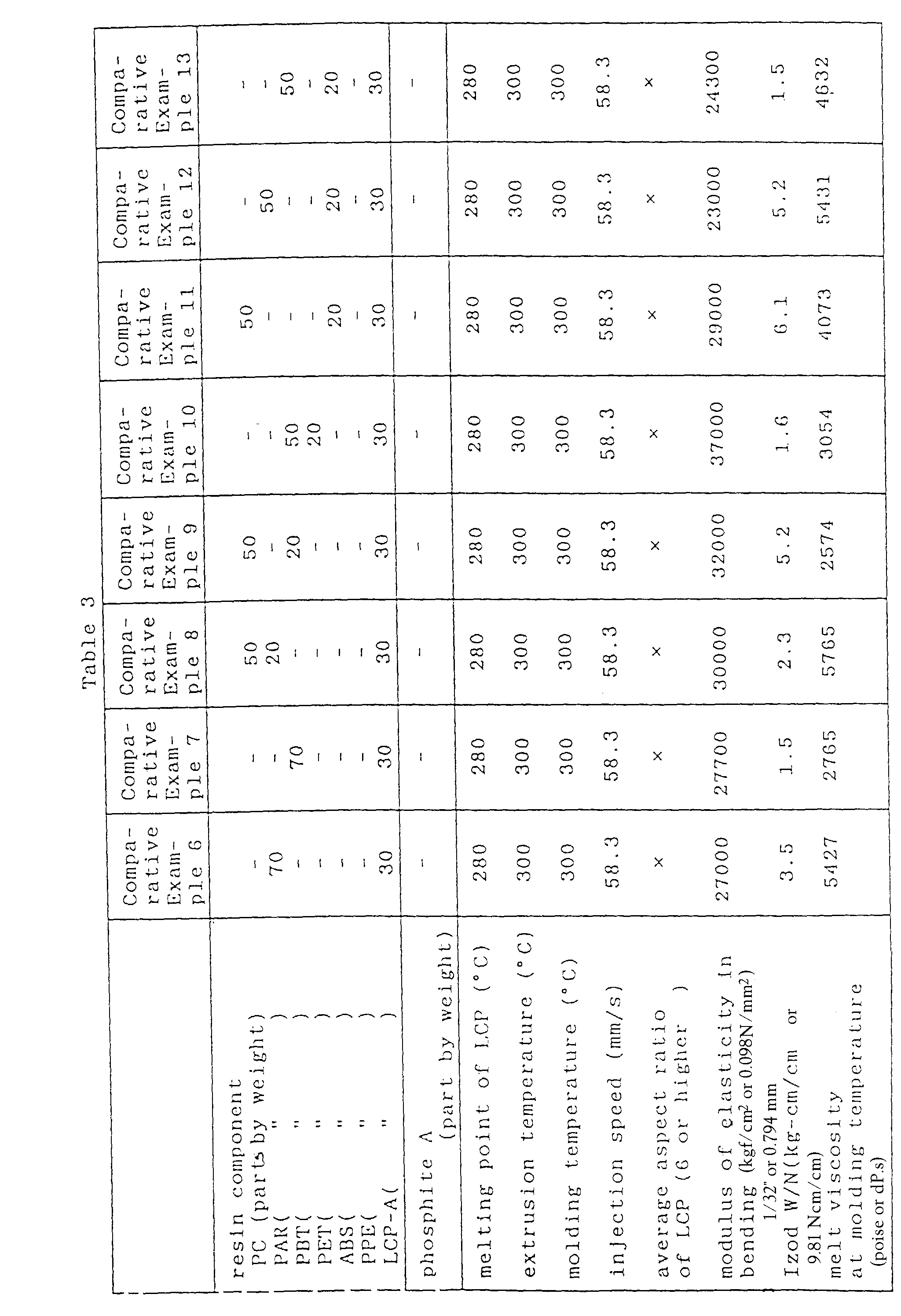

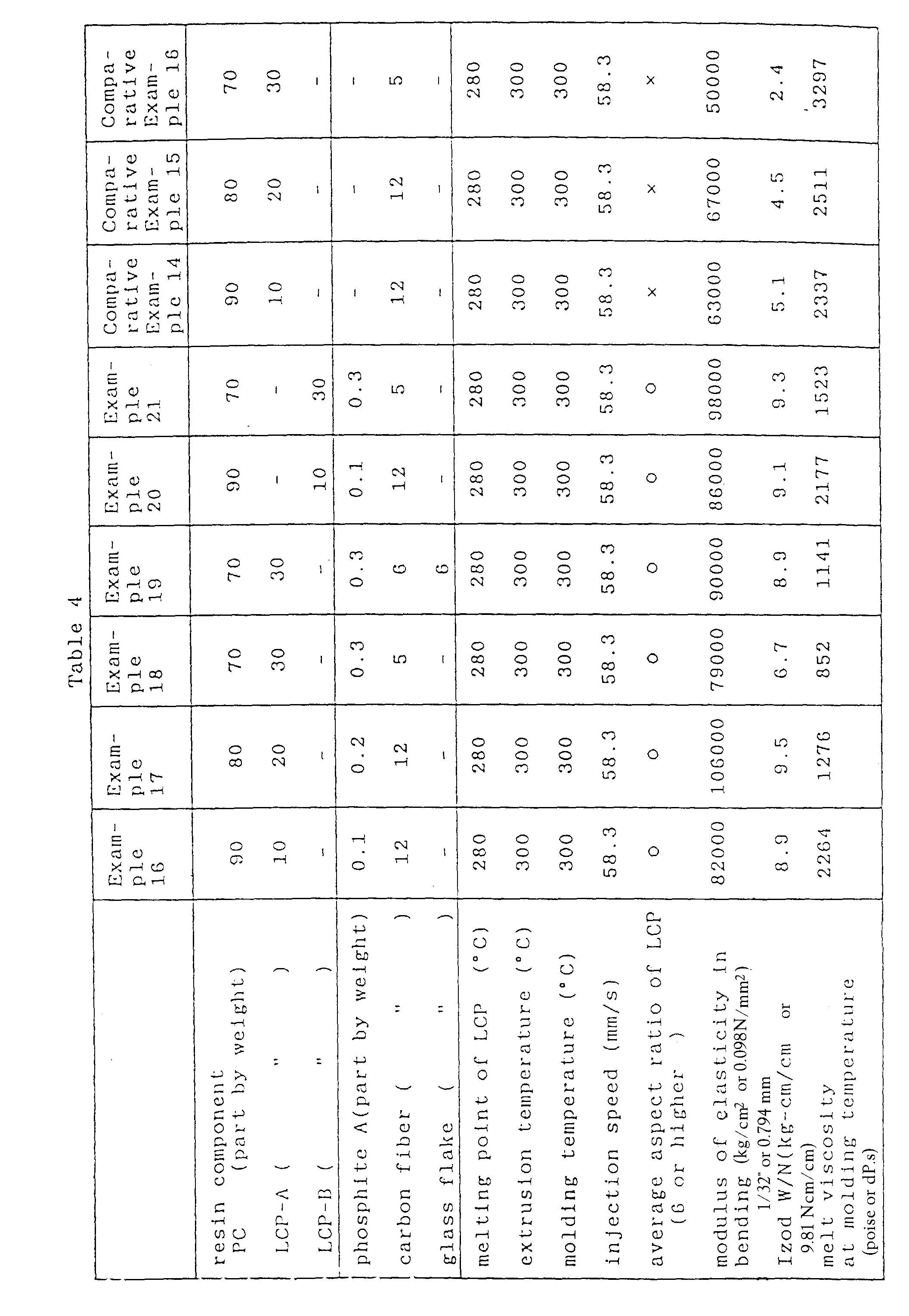

## Claims

1. A synthetic resin composition characterized in that it comprises 100 parts by weight of a resin component composed of 99 to 50 parts by weight of a polyester resin (a) not forming an anisotropic melt phase and 1 to 50 parts by weight of a liquid crystal polyester resin (b) capable of forming an anisotropic melt phase as well as 0.01 to 0.5 parts by weight of a phosphorous compound (c), said liquid crystal polyester resin (b) capable of forming an anisotropic melt phase having been fibrillated to an aspect ratio of 6 or more in the molding step.

2. The synthetic resin composition according to claim 1, wherein a ratio (c)/(a) of said polyester resin (a) not forming an anisotropic melt phase and said phosphorus compound (c) is 0.001 to 0.005.

3. The synthetic resin composition according to claim 1 or 2, wherein said polyester resin (a) not forming an anisotropic melt phase is one or two resins selected from a polycarbonate resin, a polyalkylene terephthalate resin and a polyallylate resin.

4. The synthetic resin composition according to claim 3, wherein said polyalkylene terephthalate resin is a polyethylene terephthalate resin and/or a polybutylene terephthalate resin.

5. The synthetic resin composition according to any one of claims 1 to 4, wherein said phosphorus compound (c) is a phosphite compound of pentaerythritol.

6. The synthetic resin composition according to any one of claims 1 to 5, which further comprises 1 to 90 parts by weight of a thermoplastic resin not forming an anisotropic melt phase other than (a) or (b).

7. The synthetic resin composition according to any one of claims 1 to 6, which further comprises 1 to 100 parts by weight of an inorganic filler.

8. The composition as claimed in claim 1, which comprises 90 to 50 parts by weight of (a), 10 to 50 parts by weight of (b) and 0.05 to 0.5 parts by weight of (c).

9. A product of molding obtained by molding a synthetic resin composition according to any one of claims 1 to 8.

10. The product of molding according to claim 9, wherein said molding is performed at a temperature lower than the melting point of the liquid crystal polyester resin (b) capable of forming an anisotropic melt phase.

## Patentansprüche

1. Synthetikharzzusammensetzung, dadurch gekennzeichnet, daß sie 100 Gewichtsteile einer Harzkomponente enthält, zusammengesetzt aus 99 bis 50 Gewichtsteilen eines Polyesterharzes (a), welches keine anisotrope Schmelzphase bildet, und 1 bis 50 Gewichtsteilen eines Flüssigkristallpolyesterharzes (b), welches zur Bildung einer anisotropen Schmelzphase fähig ist, sowie 0,01 bis 0,5 Gewichtsteilen einer Phosphorverbindung (c), wobei das Flüssigkristallpolyesterharz (b), welches zur Bildung einer anisotropen Schmelzphase fähig ist, auf ein Aspektverhältnis von 6 oder mehr im Formungsschritt fibrilliert wurde.

2. Synthetikharzzusammensetzung gemäß Anspruch 1, bei der ein Verhältnis (c)/(a) des Polyesterharzes (a), welches keine anisotrope Schmelzphase bildet, und der Phosphorverbindung (c) 0,001 bis 0,005 ist.

3. Synthetikharzzusammensetzung gemäß Anspruch 1 oder 2, bei der es sich bei dem Polyesterharz (a), welches keine anisotrope Schmelzphase bildet, um ein oder zwei Harze ausgewählt aus einem Polycarbonatharz, einem Polyalkylenterephthalatharz und einem Polyallylatharz handelt.

4. Synthetikharzzusammensetzung gemäß Anspruch 3, bei dem es sich bei dem Polyalkylenterephthalatharz um ein Polyethylenterephthalatharz und/oder ein Polybutylenterephthalatharz handelt.

5. Synthetikharzzusammensetzung gemäß einem der Ansprüche 1 bis 4, bei der es sich bei der Phosphorverbindung (c) um eine Phosphitverbindung von Pentaerythritol handelt.

6. Synthetikharzzusammensetzung gemäß einem der Ansprüche 1 bis 5, die des weiteren 1 bis 90 Gewichtsteile eines thermoplastischen Harzes, welches keine anisotrope Schmelzphase bildet, anders als (a) oder (b), enthält.

7. Synthetikharzzusammensetzung gemäß einem der Ansprüche 1 bis 6, die des weiteren 1 bis 100 Gewichtsteile eines anorganischen Füllers enthält.

8. Zusammensetzung gemäß Anspruch 1, die 90 bis 50 Gewichtsteile von (a), 10 bis 50 Gewichtsteile von (b) und 0,05 bis 0,5 Gewichtsteile von (c) enthält.

9. Produkt aus einer Formgebung, erhalten durch Formen einer synthetischen Harzzusammensetzung gemäß einem der Ansprüche 1 bis 8.

10. Produkt aus einer Formgebung gemäß Anspruch 9, wobei das Formen bei einer Temperatur von weniger als dem Schmelzpunkt des Flüssigkristallpolyesterharzes (b) erfolgt, welches zur Bildung einer anisotropen Schmelzphase fähig ist.

## Revendications

1. Composition de résine synthétique, caractérisée en ce qu'elle comprend 100 parties en poids d'un composant résine composé de 99 à 50 parties en poids d'une résine polyester (a) ne formant pas de phase fondue anisotrope et 1 à 50 parties en poids d'une résine polyester à cristaux liquides (b) capable de former une phase fondue anisotrope, ainsi que 0,01 à 0,5 partie en poids d'un composé phosphoreux (c), ladite résine polyester à cristaux liquides (b) étant capable de former une phase fondue anisotrope ayant été fibrillée jusqu'à avoir un rapport de forme de 6 ou plus pendant l'étape de moulage.

2. Composition de résine synthétique selon la revendication 1, dans laquelle le rapport (c)/(a) entre ladite résine polyester (a) ne formant pas de phase fondue anisotrope et ledit composé du phosphore (c) est compris entre 0,001 et 0,005.

3. Composition de résine synthétique selon la revendication 1 ou 2, dans laquelle ladite résine polyester (a) ne formant pas de phase fondue anisotrope est une ou deux résines choisies parmi une résine polycarbonate, une résine poly(téréphtalate d'alkylène) ou une résine polyallylate.

4. Composition de résine synthétique selon la revendication 3, dans laquelle ladite résine poly(téréphtalate d'alkylène) est une résine poly(téréphtalate d'éthylène) et/ou une résine poly(téréphtalate de butylène).

5. Composition de résine synthétique selon l'une quelconque des revendications 1 à 4, dans laquelle ledit composé du phosphore (c) est un composé phosphite du pentaérythritol.

6. Composition de résine synthétique selon l'une quelconque des revendications 1 à 5, qui comprend en outre de 1 à 90 parties en poids d'une résine thermoplastique ne formant pas de phase fondue anisotrope, autre que (a) ou (b).

7. Composition de résine synthétique selon l'une quelconque des revendications 1 à 6, comprenant en outre de 1 à 100 parties en poids d'une charge inorganique.

8. Composition selon la revendication 1, qui comprend 90 à 50 parties en poids de (a), 10 à 50 parties en poids de (b) et 0,05 à 0,5 partie en poids de (c).

9. Produit de moulage obtenu par moulage d'une composition de résine synthétique selon l'une quelconque des revendications 1 à 8.

10. Produit de moulage selon la revendication 9, dans lequel ledit moulage est mis en oeuvre à une température inférieure au point de fusion de la résine polyester à cristaux liquides (b) capable de former une phase fondue anisotrope.
